# EUROPÄISCHE PATENTSCHRIFT

(11) **EP 1 358 133 B1**
(45) Veröffentlichungstag und Bekanntmachung des Hinweises auf die Patenterteilung: **03.11.2004**
(21) Anmeldenummer: 01931635.5
(22) Anmeldetag: 21.04.2001
(51) Int. Cl.: C03C 1/00, C03C 13/00

(54) **VERFAHREN ZUR HERSTELLUNG VON DÄMMSTOFFEN AUS MINERALFASERN**
METHOD FOR PRODUCING INSULATING MATERIALS FROM MINERAL FIBERS
PROCEDE DE PRODUCTION DE MATERIAUX ISOLANTS EN FIBRES MINERALES

(30) Priorität: 20.01.2001 DE 10102615
(43) Veröffentlichungstag der Anmeldung: 05.11.2003
(73) Patentinhaber: Deutsche Rockwool Mineralwoll GmbH & Co. OHG, 45966 Gladbeck (DE)
(72) Erfinder: KLOSE, Gerd-Rüdiger, 46286 Dorsten (DE); LEISMANN, Andreas, 44789 Bochum (DE); NYKIEL, Guido, 45966 Gladbeck (DE)
(74) Vertreter: Wanischeck-Bergmann, Axel
(86) Internationale Anmeldenummer: PCT/EP2001/004535
(87) Internationale Veröffentlichungsnummer: WO 2002/057194

(56) Entgegenhaltungen:
- WO-A-98/45215
- GB-A- 2 170 496
- US-A- 5 198 190
- KROKHIN V P ET AL: "USE OF PETROCHEMICAL WASTE IN THE GLASS INDUSTRY" GLASS AND CERAMICS, CONSULTANTS BUREAU. NEW YORK, US, Bd. 53, Nr. 5/6, 1. Mai 1996 (1996-05-01), Seiten 180-181, XP000680219 ISSN: 0361-7610
- SHARDAKOV N T ET AL: "USE OF SPENT CATALYSTS FOR SYNTHESIS OF UNDERCOAT ENAMELS" GLASS AND CERAMICS, CONSULTANTS BUREAU. NEW YORK, US, Bd. 52, Nr. 5/6, 1. Mai 1995 (1995-05-01), Seiten 135-136, XP000559469 ISSN: 0361-7610

## Beschreibung

Die Erfindung betrifft ein Verfahren zur Herstellung von Dämmstoffen aus Mineralfasern, insbesondere aus Glas- und/oder Steinwolle, bei dem in einem Schmelzaggregat, insbesondere einem Kupolofen, eine silikatische Schmelze hergestellt und in einer Zerfaserungseinrichtung in vorzugsweise mikrofeine Fasern zerfasert wird, den Fasern vorzugsweise Binde- und/oder Imprägnierungsmittel zugesetzt werden und die Fasern auf einer Fördereinrichtung als Vlies abgelegt werden.

Die Erfindung betrifft ferner eine Schmelze zur Herstellung von Mineralfasern für ein Mineralfaservlies.

Dämmstoffe aus Mineralfasern werden aus silikatischen Schmelzen hergestellt. Hierzu wird ein silikatisches Ausgangsmaterial, beispielsweise Gläser, natürliches oder künstliches Gestein einem Schmelzaggregat, beispielsweise einem Kupolofen oder einem Schachtofen zugeführt. Die hieraus gewonnene silikatische Schmelze wird sodann einem Zerfaserungsaggregat zugeführt, in dem die silikatische Schmelze in mikrofeine Mineralfasern zerfasert wird. Die sodann einer Sammelkammer zugeleiteten Mineralfasern werden in der Regel mit Binde- und/oder Imprägnierungsmitteln benetzt und auf einer unterhalb der Sammelkammer angeordneten Fördereinrichtung, in der Regel handelt es sich hierbei um ein Förderband, abgelegt. Die mit Binde- und/oder Imprägniermitteln benetzten Mineralfasern bilden auf dem Fördermittel ein Mineralfaservlies, welches in nachgeschalteten thermischen und/oder mechanischen Einrichtungen in an sich bekannter Weise bearbeitet wird, um Dämmstoffe in Form von Bahnen, Platten, Formkörpern oder dergleichen herzustellen.

Bei den Dämmstoffen aus Mineralfasern werden solche aus Glaswolle von solchen aus Steinwolle unterschieden. Steinwolle-Dämmstoffe wurden ursprünglich aus Gesteinen, wie Diabas, Basalt und Kalkstein, Dolomit erschmolzen. Zwischenzeitlich ist man dazu übergangen, diese natürlichen Gesteine durch künstliche Gesteine zu ersetzen oder zusammen mit künstlichen Gesteinen dem Schmelzvorgang zuzuführen. Bei dem zumeist in Kupolöfen durchgeführten Schmelzvorgang besteht eine starke Abhängigkeit zwischen der Viskosität und der Temperatur. Ferner ist die Keimbildungszahl und somit die Neigung zur Kristallisation sehr hoch. Diese Eigenschaften führen bei der Bildung der Mineralfasern auf sogenannten Kaskaden-Spinnmaschinen zu relativ kurzen und in sich verwirrbelten Mineralfasern. Die einzelnen Mineralfasern selbst sind glasig erstarrt. Aufgrund ihrer Zusammensetzung ist die Temperaturbeständigkeit der Mineralfasern aus einer Gesteinsschmelze höher als bei Dämmstoffen aus Glaswolle.

Glaswolle-Dämmstoffe enthalten als Netzwerkswandler vorwiegend Natrium- und Boroxide. Die Schmelze für Glaswolle-Dämmstoffe weist eine wenig ausgeprägte Abhängigkeit der Viskosität von der Temperatur auf. Die Zerfaserung dieser Glasschmelze erfolgt nicht auf Kaskaden-Spinnmaschinen, sondern mit Hilfe rotierender schüsselförmiger Körper, deren Wandungen Bohrungen aufweisen. Durch die hierbei auftretende Zentrifugalkraft wird die Glasschmelze durch diese Bohrungen gepresst, so dass im Vergleich zu Mineralfasern aus Steinwolle längere Mineralfasern aus Glaswolle ausgezogen werden.

Von Bedeutung bei der Herstellung und Beurteilung von Mineralfasern ist die Biolöslichkeit, d.h. die Verweildauer der Mineralfasern im menschlichen Organismus. Die Biolöslichkeit von Dämmstoffen aus Steinwolle wird durch den Gehalt von Al₂O₃ maßgeblich beeinflußt. Mit zunehmenden Anteilen Al₂O₃ steigt zum einen die Temperaturbeständigkeit der Fasern und zum anderen in überraschender Weise auch die Biolöslichkeit.

Eine typische Zusammensetzung von biolöslichen Mineralfasern aus Steinwolle weist einen Anteil von SiO₂ zwischen 35 und 43 Masse-%, einen Anteil Al₂O₃ von 17,5 bis 23,5 Masse-%, einen Anteil von TiO₂ von 0,1 bis 3 Masse-%, einen Anteil von FeO von 1,7 bis 9,3 Masse-%, einen Anteil CaO + MgO von 23,5 bis 32 Masse-% und einen Anteil von K₂O + Na₂O von 1,3 bis 7 Masse-% auf.

Für die Wirtschaftlichkeit der als Massenprodukt angewendeten Dämmstoffe aus Steinwolle ist der Einsatz von Rohstoffen bedeutsam, die einen hohen Anteil an Al₂O₃ aufweisen. Natürliche Gesteine enthalten zwar vielfach Alumosilikate, diese liegen aber häufig nicht in den erforderlichen Konzentrationen bzw. nur zusammen mit unerwünschten Mineralien vor. Calcinierte Bauxite sind demgegenüber relativ teuer. Aus diesem Grunde werden vielfach Reststoffe verwertet, die bisher häufig ausschließlich deponierfähig waren und die wegen des Gehaltes an löslichen Stoffen nicht unerhebliche Risiken für die Umwelt darstellen. Gleichzeitig werden diese Reststoffe, die beispielsweise bei der Steinwolle-Herstellung anfallen, in Form von Schmelzenresten, abgetrennten, nicht faserigen Partikeln, Filterstäuben, fehlerhaften Produktionen oder dergleichen in einem primären Reststoff-Kreislauf fast vollständig wiederverwertet. Diese Reststoffe werden vor ihrer Verwertung entsprechend den Anforderungen der maschinellen Einrichtung, insbesondere der Schmelzaggregate aufbereitet. Beispielsweise werden die Reststoffe zur Verwertung zerkleinert und in unterschiedlichen Korngrößen miteinander bzw. mit anderen splittigen Rohstoffen vermischt, mit Bindemitteln, wie beispielsweise Zement versetzt und zu ausreichend großen Formkörpern verpresst, bevor diese Formkörper als grobstückige Rohstoffe einem Schachtofen bzw. einem Kupolofen zugeführt werden. Aus der EP 0 765 295 C1 ist beispielsweise bekannt, geeignete Formkörper aus feinkörnigen Rohstoffen auch mit Hilfe von Lignin zu binden. In der WO 94/12007 werden entsprechende Formköper mit molassehaltigem Bindemittel beschrieben.

WO 98 45215 A beschreibt ein Verfahren zur Herstellung von Isolierwolle wobei flüssige saure Schlacken zugesetzt werden. Um in diesen Schlacken den Al2O3-Gehalt zu erhöhen können auch Gebrauchtkatalysatoren zugegeben werden. Katalysatoren der Erdölverarbeitung werden nicht erwähnt.

GLASS AND CERAMICS, Bd. 53, Nr. 5/6, 1. Mai 1996, Seiten 180-181 offenbart die Verwendung von Abfallen aus der Petrochemie in der Glasindustrie als Ersatzstoff für ferrochromatischen Schlacken als Pigment.

GLASS AND CERAMICS, Bd. 52, Nr. 5/6, 1. Mai 1995, Seiten 135-136 beschreibt die Verwendung von gebrauchten Katalysatoren aus der Petrochemie für die Herstellung von Emaille als Überzugsschicht.

Ausgehend von diesem Stand der Technik liegt der Erfindung die **Aufgabe** zugrunde, ein erfindungsgemäßes Verfahren und eine erfindungsgemäße Schmelze derart weiterzuentwicklen, dass durch die Verwendung kostengünstiger Ausgangsstoffe ein preiswerteres Verfahren durchgeführt werden kann bzw. eine kostengünstige Schmelze zur Verfügung steht.

Die **Lösung** dieser Aufgabenstellung sieht bei einem gattungsgemäßen Verfahren vor, dass die silikatische Schmelze aus insbesondere nicht mehr gebrauchsfähigen Katalysatoren der Erdölverarbeitung hergestellt wird.

Demzufolge sieht die Erfindung vor, dass bei einem an sich bekannten Verfahren die silikatische Schmelze zumindest teilweise aus insbesondere nicht mehr gebrauchsfähigen Katalysatoren der Erdölverarbeitung hergestellt wird.

Erdöle bestehen aus Gemischen von hochmolekularen bis niedermolekularen Verbindungen. Sie dienen als Rohstoffe für eine Vielzahl von Stoffen, wie beispielsweise Kraftstoffe, Basisprodukte für die Herstellung von Kunststoffen oder als Ausgangsstoff für Bitumen und Asphalten. Bei den verschiedenen Bearbeitungsstufen laufen eine Vielzahl von Prozessen, wie Hydrieren, Dehydrieren, Oxidieren oder Reduzieren von Zwischenprodukten, wirtschaftlich nur unter Verwendung von Katalysatoren ab.

Es werden diesbezüglich zwei Klassen von Katalysatoren unterschieden. Zum einen werden Redox-Katalysatoren, wie Chromoxid oder Vanadiumpentoxid, Metalle, beispielsweise Platin, Palladium oder Nickel verwendet, die Hydrierungs-, Dehydrierungs- oder Oxidationsprozesse katalytisch beeinflussen. Die Metalle sitzen hierbei auf Trägern aus beispielsweise Aluminiumoxid. Andererseits finden Säure-Basen-Katalysatoren für Isomerierungs-, Alkylierungs- oder Crackreaktionen Verwendung, die über ionenähnliche Zwischenstufen verlaufen. Typische Säure-Basen-Katalysatoren bestehen aus sauren Aluminiumoxiden, Alumosilikaten oder Zeolithen. Derartige Katalysatoren haben eine relativ lange Nutzungsdauer, da sie wiederholt regeneriert werden können. Ein Austausch dieser Katalysatoren ist beispielsweise bei der Anlagerung von Koks oder von sogenannten Katalysatorgiften bzw. bei einer Verringerung der spezifischen Oberfläche von Edelmetallen als Folge von Rekristallisationen notwendig. Die in den Katalysatoren enthaltenen Edelmetalle können bei höheren Gehalten wirtschaftlich rückgewonnen werden.

Die bei dem katalytischen Cracken oder Hydrocracken anfallenden gebrauchten Katalysatoren stellen aber in der Regel Abfälle dar, deren Wiederverwendung nur in wenigen anderen Prozessen wirtschaftlich ist, um die Umwelt zu entlasten.

Um aus Erdölen beispielsweise, hochwertige Kraftstoffe zu gewinnen, werden Destillatprodukte von Erdölen einem katalytischen Crackverfahren unterworfen. Die Behandlung erfolgt zumeist in Wirbelbett-Reaktoren. Hierbei verlaufen die katylitischen Crackreaktionen in Gegenwart saurer Katalysatoren nach einem Carboniumionen-Mechanismus ab. Als gebräuchliche Katalysatoren werden zumeist mit Protonen dotierte Aluminosilikate verwendet. Diese Katalysatoren ersetzen die zuvor verwendeten säurebehandelten Tonminerale der Montmorillonitgruppe, die wegen ihrer Kristallinität und der vorhandenen Verunreinigungen, wie beispielsweise durch Eisen oder durch amorphe Aluminosilikate abgelöst wurden. Handelsübliche amorphe Aluminosilikate enthalten ca. 10 bis 15 Masse-% Al₂O₃, wobei auch Aluminosilikate bekannt sind, deren Al₂O₃ -Gehalt zwischen 20 bis 30 Masse-% liegt.

Wirtschaftlich von weitaus größerer Bedeutung und daher auch wesentlich verbreiteter sind Katalysatoren aus synthetischen Zeolithen mit der Kristallstruktur des Minerals Faujasit. Geeignete Zeolithe werden beispielsweise von der Firma Union Carbide mit der Bezeichnung Linde Typ X oder Linde Typ Y hergestellt. Die Summenformel dieser beiden Zeolith-Typen lauten:

Linde Typ X: Na₈₆ [(AlO₂)₈₆(SiO₂)₁₀₆] x H₂O

Linde Typ Y: Na₅₆ [(AlO₂)₅₆(SiO₂)₁₃₆] x H₂O

Die chemische Wirksamkeit steigt mit dem Austausch der NA-Ionen gegen dreiwertige Ionen, wie beispielsweise Lantan, Lantaniden oder anderen seltene Erden extrem an. Demzufolge werden als wirksamste Katalysatoren sogenannte H-RE-Faujasite eingesetzt, wobei "RE" als Abkürzung für "rare earths", demzufolge für "seltene Erden" steht.

Aus verschiedenen technischen Gründen, wie beispielsweise der Erhöhung der Abriebfestigkeit, der thermischen Stabilität und der besseren Verteilung der aktiven Substanzen ist es sinnvoll, dass die Zeolith-Katalysatoren in einer Matrix aus Kieselgel, amorphen Aluminosilikaten oder Tonen verteilt werden. Der H-RE-Faujasit wird beispielsweise in relativ geringen Mengen in amorphen Aluminosilikaten eingebettet. Zeolith-Katalysatoren arbeiten selektiver, als amorphe Aluminosilikate, wobei die amorphen Aluminosilikate die Bildung von Olefinen begünstigen. Derartige Katalysatoren weisen eine hohe offene Porosität und eine große spezifische Oberfläche auf, die für ihre Aufgabe als Katalysator beim katalytischen Crack-Verfahren von Vorteil und erforderlich sind. Durch das Abscheiden von Koks werden die aktiven Zentren der Katalysatoren deaktiviert. Eine Reinigung der kostenintensiven Katalysatoren erfolgt beispielsweise dadurch, dass die Koksablagerungen vorsichtig abgebrannt werden. Eine vollständige Reinigung kann hierbei aber nicht gewährleistet werde, so dass die Lebensdauer eines derartigen Katalysators auch bei regelmäßigen Reinigungen begrenzt ist.

Eine dauerhafte Deaktivierung der Katalysatoren kann darüber hinaus durch Metallverbindungen in den Destillaten verursacht werden. In erster Linie handelt es sich bei derartigen Metallen in Destillaten um Vanadium, Nickel und/oder Eisen, die selbst wiederum als Katalysatoren wirken und unerwünschte Reaktionen hervorrufen. Durch die Abnahme der katalytischen Wirkung und der Selektivität werden die Katalysatoren unbrauchbar und müssen ausgewechselt werden. In der Regel werden derartige Katalysatoren als Abfallstoffe deponiert, soweit sie nicht in anderen Prozessen wirtschaftlich wiederverwendet werden können.

Hier beschriebene Katalysatoren werden in sogenannten Festbettreaktoren eingesetzt und liegen in Form von gut rieselfähigen Partikeln mit Korngrößen von 3 bis 4 mm vor. Bei der Verwendung von Wirbelschicht-Reaktoren werden Katalysatoren eingesetzt, deren Partikel mittlere Durchmesser von ca. 50 bis 70 µm aufweisen.

Verfahren zur raffinierenden Hydrierung von Erdölfraktionen sind Bestandteil des sogenannten Hydrotreatings. Die hierbei unterschiedlichen Verfahren werden angewendet, um beispielsweise schädliche oder hemmende Begleitstoffe abzutrennen. Hierzu werden Katalysatoren verwendet, die u.a. auf der Verwendung von Kobalt- und Molybdän-Oxiden mit Aluminiumoxid als Trägermaterial basieren. Derartige Katalysatoren liegen in Form von Strangpresslingen vor und haben eine Ausgangslänge von etwa 2,5 bis 3 mm.

Schließlich werden zur spaltenden Hydrierung von Erdölfraktionen Hydrocrackverfahren angewendet, bei denen typische Hydrocrack-Katalysatoren Verwendung finden, die beispielsweise Metalle, wie Nickel oder Wolfram in Mengen von ca. 15 bis 25 Masse-% oder CoO + MoO₃ mit Anteilen von ca. 22 bis 28 Masse-% sowie Trägermaterial enthalten. Das Trägermaterial besteht entweder aus nahezu reinem Al₂O₃ oder aus Alumosilikaten.

In überraschender Weise hat sich nunmehr gezeigt, dass die voranstehend beschriebenen Katalysatoren in gebrauchtem Zustand besonderes gut als ergänzende Rohstoffe für die Herstellung von Mineralwolle-Dämmstoffen geeignet sind.

Nach einem weiteren Merkmal der Erfindung ist es vorteilhaft, als Katalysatoren solche aus Crack- und Hydrocrackverfahren zu verwenden, die sich sehr gut als Ersatz-Rohstoffe, insbesondere für die Produktion von Steinwolle-Dämmstoffen eignen. Als charakteristische Größe können die Hauptbestandteile mit SiO₂ in Anteilen von ca. 30 bis ca. 55 Masse-% und Al₂O₃ mit Gehalten von zwischen ca. 30 bis 50 Masse-% genannt werden.

Es können aber auch Katalysatoren Verwendung finden, die aus Zeolithen bestehen, wobei insbesondere die voranstehend beschriebenen Zeolithe der Typen Linde von Interesse sind, wenn deren Natriumgehalt reduziert wird, um zu hohe Gehalte an Alkalien in den Dämmstoffen zu vermeiden. Alle anderen Bestandteile der Katalysatoren sind von untergeordneter Bedeutung und können daher ohne negative Auswirkungen in die Schmelze eingebracht werden.

Es ist nach einem weiteren Merkmal der Erfindung vorgesehen, dass beim Aufschmelzen der Katalysatoren ausfallende Metalle aufgefangen und periodisch abgelassen werden. Vorzugsweise werden die Metalle gemeinsam mit aus den Rohstoffen herausreduziertem metallischen Eisen aufgefangen und periodisch abgelassen. Hierbei ist es vorteilhaft, dass die Schmelzaggregate, beispielsweise die Kupolöfen im Bereich ihres eigentlichen Schachtes keine feuerfeste Ausmauerung aufweisen, so dass die in den Katalysatoren vorhandenen Metalle keine Gefahr für das Schmelzaggregat darstellen.

Nach einer vorteilhaften Weiterbildung des erfindungsgemäßen Verfahrens ist vorgesehen, in der Schmelze enthaltene oxidische Bestandteile, beispielsweise seltene Erden, wie La₂O₃, CeO₂, Pr₆O₁₁ in der Schmelze zu lösen.

Nach einem weiteren Merkmal der Erfindung ist vorgesehen, dass die Schmelze aus den Katalysatoren und den üblichen Rohstoffen für die Herstellung von Dämmstoffen aus Mineralfasern, insbesondere Diabas, Basalt und Kalkstein sowie Dolomit und/oder bei der Herstellung, bzw. dem Recycling gewonnenen Reststoffen hergestellt wird. Bei dieser Ausführungsform ist demzufolge vorgesehen, dass die Katalysatoren lediglich ein Bestandteil der Schmelze sind, deren Anteil innerhalb der Schmelze entsprechend dem geforderten Qualitätsniveau der Dämmstoffmaterialien angepaßt wird.

Die feinkörnigen Katalysatormassen werden nach einem weiteren Merkmal der Erfindung vor ihrer Aufschmelzung zu grobstückigen Körpern verpresst. Vorzugsweise werden die feinkörnigen Katalysatormassen zusammen mit den Reststoffen aus dem primären Abfallkreislauf und als Stützkorn verwendeten Gesteinen sowie Bindemittel, wie hydraulischen Zementen, latenthydraulischen Stoffen, Kalk und/oder Lignin, Molasse oder dergleichen vermischt und zu grobstückigen Körpern verpresst. Nach der Erhärtung werden diese grobstückigen Körper zusammen mit den grobstückigen Gesteinen und Koks dem Schmelzaggregat aufgegeben und dort aufgeschmolzen. Von Vorteil ist hierbei eine gute Durchmischung der Bestandteile der Schmelze vor der Aufgabe in das Schmelzaggregat.

Die Katalysatoren können alternativ insgesamt oder zumindest teilweise als feinkörnige Masse über Windformen in das Schmelzaggregat, insbesondere einen Schachtofen eingeblasen werden. Um eine Temperaturabsenkung im Schmelzbereich des Ofens zu vermeiden, bzw. zu verringern hat es sich als vorteilhaft erwiesen, die Katalysatorpartikel vorzuwärmen, wobei insbesondere eine maximale Vorwärmtemperatur von 600°C angestrebt werden sollte.

Neben dem voranstehend beschriebenen Verfahren betrifft die Erfindung weiterhin eine Schmelze zur Herstellung von Mineralfasern für ein Mineralfaservlies, insbesondere aus Steinwolle, welches zu Dämmmaterialien verarbeitbar ist. Die erfindungsgemäße Schmelze ist durch nicht mehr gebrauchsfähige Katalysatoren der Erdölverarbeitung gekennzeichnet.

Vorzugsweise stammen die Katalysatoren aus Crack- und/oder Hydrocrackverfahren, die sich als sehr gute Ersatzrohstoffe für die Herstellung von Steinwolle-Dämmstoffen erwiesen haben.

Nach einem weiteren Merkmal der erfindungsgemäßen Schmelze ist vorgesehen, dass die Katalysatoren mit Reststoffen aus dem primären Abfallkreislauf und/oder Recyclingstoffen der Mineralfaserherstellung vermischt sind. Eine derartige Mischung eignet sich insbesondere für die Herstellung von qualitativ ausreichend hochwertigen Dämmmaterialien aus Steinwolle.

Vorzugsweise weist die erfindungsgemäße Schmelze 20 bis 60 Masse-% SiO₂ und 10 bis 60 Masse-%, insbesondere 10 bis 30 Masse-% Al₂O₃ auf.

Die in der Schmelze vorliegenden Katalysatoren haben vorzugsweise eine Korngröße zwischen 2 und 6 mm, insbesondere zwischen 3 und 4 mm, so dass sie sich zum einen für das Pressen von in ein Schmelzaggregat aufzugebenden grobstückigen Körpern und zum anderen zum Einblasen in einen Schachtofen eignen. Beispielsweise können hierzu Katalysatoren aus Festbettreaktoren verwendet werden, die in Form von gut rieselfähigen Partikeln vorliegen. Alternativ sind aber auch solche Katalysator-Partikel geeignet, die in Wirbelschicht Reaktoren eingesetzt werden und einen mittleren Durchmesser von 30 bis 100 µm, vorzugsweise zwischen 50 und 70 µm aufweisen.

Eine weitere Alternative stellen Katalysatoren dar, die in Verfahren zur raffinierenden Hydrierung von Erdölfraktionen eingesetzt werden. Bei derartigen Katalysatoren ist eine Ausbildung als Strangpresslinge festzustellen, die vorzugsweise eine Länge zwischen 1 und 5 mm, insbesondere zwischen 2,5 und 3 mm aufweisen.

Schließlich ist nach einem weiteren Merkmal der Erfindung vorgesehen, dass die Katalysatoren 10 bis 30 Masse-%, insbesondere 15 bis 25 Masse-% Metalle, wie Nickel oder Wolfram oder 15 bis 35 Masse-%, vorzugsweise 22 bis 28 Masse-% Kobalt-Oxid und Molybdän-Oxid aufweisen. Als Trägermaterial ist bei derartigen Katalysatoren Aluminiumoxid vorgesehen.

Weitere Merkmale des erfindungsgemäßen Verfahrens bzw. der erfindungsgemäßen Schmelze ergeben sich aus der nachfolgenden Beschreibung bevorzugter Ausführungsbeispiele.

### Erstes Ausführungsbeispiel

Einem Kupolofen wird zur Erzeugung einer Schmelze ein grobstückiges Aufgabegut zugeführt, das zu 15% aus einem Katalysator-Material und zu 85% aus Kunststeinen besteht. Als Katalysator-Material werden amorphe Aluminiumsilikat-Katalysatoren aus Hydrocrack-Verfahren mit 12,5 Masse-% Al₂O₃ verwendet. Die Kunststeine bestehen zu 60% aus Recyclingmaterial und zu 40% aus rückgebauten Mineralfaser-Dämmstoffen, wobei das Recyclingmaterial dem Produktionsprozeß in Form von Abschnitten bzw. qualitativ minderwertigen Produkten entnommen wird. Das Aufgabegut wird aus feinkörnigem Katalysator-Material und den für die Kunststeine erforderlichen Teststoffen zusammen mit als Stützkorn verwendeten Gesteinen mit latenthydraulischen Stoffen zu grobstückigen Körpern verpresst.

### Zweites Ausführungsbeispiel

Einem Kupolofen wird zur Erzeugung einer silikatischen Schmelze, die der Herstellung von Faserdämmstoffen dient, ein grobstückiges Aufgabegut zugeführt, das zu 25% aus einem Katalysator-Material, zu 20% aus Naturstein und 55% aus Kunststeinen besteht. Als Katalysator-Material werden nicht mehr gebrauchsfähige Katalysatoren aus der Erdölverarbeitung eingesetzt, deren Hauptbestandteile SiO₂ und Al₂O₃ sind, wobei das Katalysator-Material einen Anteil von 45 Masse-% SiO₂ und 40 Masse-% Al₂O₃ sowie desweiteren sonstige oxidische Bestandteile, wie seltene Erden und Metalle aufweist. Als Naturstein werden Diabas, Basalt und Kalkstein sowie Dolomit verwendet. Der Kunststein setzt sich aus Reststoffen zusammen, die während der Herstellung von Faserdämmstoffen oder durch den Rückbau von Faserdämmstoffen anfällt, wobei ein Anteil des herstellungsseitig bedingten Recyclingmaterials von 70% und ein aus dem Rückbau gewonnener Anteil von 30% vorgesehen ist.

Das Katalysator-Material und die zu den Kunststeinen zu verarbeitenden Reststoffe werden feinkörnig aufbereitet und mit Kalk und Lignin vermischt und zu grobstückigen Körpern verpresst. Anschließend wird das Aufgabegut als gemischte Fraktion aus Naturstein und grobstückigen Körpern aus Katalysator-Material und Kunststein dem Kupolofen zugeführt, in dem das Aufgabegut geschmolzen und anschließend einem Zerfaserungsaggregat zugeführt wird, in dem die Schmelze in mikrofeine Fasern zerfasert wird, welche Fasern dann auf einem Förderband in Form eines Mineralfaservlieses abgelegt werden. Das Mineralfaservlies wird anschließend mechanisch und thermisch behandelt, um gewünschte Mineralfaser-Dämmstoffe herzustellen.

### Drittes Ausführungsbeispiel

Im dritten Ausführungsbeispiel werden ebenfalls Katalysatormaterial, Natursteine und Kunststeine als Aufgabegut einem Kupolofen zugeführt, wobei eine Mischung von 45% Katalysator-Material, 20% Natursteinen und 35% Kunststeinen vorgesehen ist. Die Kunststeine setzen sich aus 80% Recyclingmaterial und 20% Rückbaumaterial zusammen, wobei das Recyclingmaterial und das Rückbaumaterial zusammen mit dem Katalysatormaterial feinkörnig aufbereitet und zu grobstückigem Aufgabegut verpresst wird. Hierzu wird ein Bindemittel verwendet, das hydraulischen Zement aufweist. Die Herstellung des Mineralfaser-Dämmstoffes erfolgt dann gemäß den voranstehenden Ausführungen.

## Patentansprüche

1. Verfahren zur Herstellung von Dämmstoffen aus Mineralfasern, insbesondere aus Glas- und/oder Steinwolle, bei dem in einem Schmelzaggregat, insbesondere einem Kupolofen eine silikatische Schmelze hergestellt und in einer Zerfaserungseinrichtung in vorzugsweise mikrofeine Fasern zerfasert wird, den Fasern vorzugsweise Binde- und/oder Imprägnierungsmittel zugesetzt werden und die Fasern auf einer Fördereinrichtung als Vlies abgelegt werden,
**dadurch gekennzeichnet,**
**dass** die silikatische Schmelze zumindest teilweise aus insbesondere nicht mehr gebrauchsfähigen Katalysatoren der Erdölverarbeitung hergestellt wird.

2. Verfahren nach Anspruch 1,
**dadurch gekennzeichnet,**
**dass** als Katalysatoren solche aus Crack- und/oder Hydrocrackverfahren verwendet werden.

3. Verfahren nach Anspruch 1,
**dadurch gekennzeichnet,**
**dass** bei Zeolithen der Natriumgehalt der Katalysatoren reduziert wird.

4. Verfahren nach Anspruch 1,
**dadurch gekennzeichnet,**
**dass** beim Aufschmelzen der Katalysatoren ausfallende Metalle aufgefangen und periodisch abgelassen werden.

5. Verfahren nach Anspruch 4,
**dadurch gekennzeichnet,**
**dass** die Metalle gemeinsam mit aus den Rohstoffen herausreduziertem metallischem Eisen aufgefangen und periodisch abgelassen werden.

6. Verfahren nach Anspruch 1,
**dadurch gekennzeichnet,**
**dass** die Schmelze aus den Katalysatoren und den üblichen Rohstoffen für die Herstellung von Dämmstoffen aus Mineralfasern, insbesondere Diabas, Basalt und Kalkstein sowie Dolomit und/oder bei der Herstellung bzw. dem Recycling gewonnenen Rohstoffen hergestellt wird.

7. Verfahren nach Anspruch 1,
**dadurch gekennzeichnet,**
**dass** in der Schmelze enthaltene oxidische Bestandteile, beispielsweise seltene Erden, wie La₂ O₃, CeO₂, Pr₆ O₁₁ gelöst werden.

8. Verfahren nach Anspruch 1,
**dadurch gekennzeichnet,**
**dass** feinkörnige Katalysatormassen vor ihrer Aufschmelzung zu grobstückigen Körpern verpresst werden.

9. Verfahren nach Anspruch 8,
**dadurch gekennzeichnet,**
**dass** den feinkörnigen Katalysatormassen aus dem primären Abfallkreislauf entnommene Reststoffe und/oder als Stützkorn verwendete silikatische Gesteine und/oder Bindemittel, beispielsweise hydraulische Zemente, latent hydraulische Stoffe, Kalk und/oder Lignin und/oder Molasse zugegeben werden.

10. Verfahren nach Anspruch 9,
**dadurch gekennzeichnet,**
**dass** die Bestandteile der Schmelze vor der Aufgabe in das Schmelzaggregat gemischt werden.

11. Verfahren nach Anspruch 1,
**dadurch gekennzeichnet,**
**dass** die Katalysatoren als feinkörnige Masse über Windformen in das Schmelzaggregat, insbesondere einen Schachtofen eingeblasen werden.

12. Verfahren nach Anspruch 1,
**dadurch gekennzeichnet,**
**dass** die Katalysatoren vor dem Einbringen in das Schmelzaggregat vorgewärmt werden.

13. Verfahren nach Anspruch 12,
**dadurch gekennzeichnet,**
**dass** die Vorwärmtemperatur maximal 600 °C beträgt.

14. Schmelze zur Herstellung von Mineralfasern für ein Mineralfaservlies, insbesondere aus Steinwolle, welches zu Dämmmaterialien verarbeitbar ist, **gekennzeichnet durch** nicht mehr gebrauchsfähige Katalysatoren der Erdölverarbeitung.

15. Schmelze nach Anspruch 14,
**dadurch gekennzeichnet,**
**dass** die Katalysatoren aus Crack- und/oder Hydrocrackverfahren stammen.

16. Schmelze nach Anspruch 14,
**dadurch gekennzeichnet,**
**dass** die Katalysatoren mit Reststoffen aus dem primären Abfallkreislauf und/oder Recyclingstoffen der Mineralfaserherstellung vermischt sind.

17. Schmelze nach Anspruch 14, **gekennzeichnet durch**
20 - 60 Masse % SiO₂
und 10 - 60 Masse %, insbesondere
10 - 30 Masse % Al₂ O₃

18. Schmelze nach Anspruch 14,
**dadurch gekennzeichnet,**
**dass** die Katalysatoren eine Korngröße zwischen 2 und 6 mm, insbesondere zwischen 3 und 4 mm aufweisen.

19. Schmelze nach Anspruch 14,
**dadurch gekennzeichnet,**
**dass** die Katalysatoren einen mittleren Durchmesser zwischen 30 und 100 µm, vorzugsweise zwischen 50 und 70 µm aufweisen.

20. Schmelze nach Anspruch 14,
**dadurch gekennzeichnet,**
**dass** die Katalysatoren als Strangpresslinge ausgebildet sind, die vorzugsweise eine Länge zwischen 1 und 5 mm, insbesondere zwischen 2,5 und 3 mm aufweisen.

21. Schmelze nach Anspruch 14,
**dadurch gekennzeichnet,**
**dass** die Katalysatoren 10 - 30 Masse-%, insbesondere 15 - 25 Masse-% Metalle, wie Ni oder W oder 15 - 35 Masse-%, vorzugsweise 22 - 28 Masse-% CoO + MoO₃ aufweisen.

## Claims

1. Method for producing insulating materials from mineral fibers, particularly from glass and/or rock wool, in which method a silicate melt is prepared in a melting unit, particularly a cupola furnace, and disintegrated in a disintegration unit to preferably microfine fibers, and preferably binders and/or proofing agents are added to the fibers, and the fibers are placed on a conveyor means in the form of an unwoven material,
**characterized in**
**that** the silicious melt is prepared at least partly from oil refining catalysts and particularly from those oil refining catalysts which are no longer usable.

2. Method according to claim 1,
**characterized in**
**that** as catalysts those from cracking and/or hydrocracking processes are used.

3. Method according to claim 1,
**characterized in**
**that** with zeolites the sodium content of the catalysts is reduced.

4. Method according to claim 1
**characterized in**
**that** metals precipitated during the melting-open of the catalysts are collected and periodically drained.

5. Method according to claim 4,
**characterized in**
**that** the metals are collected and periodically drained together with metallic iron reduced from the raw materials.

6. Method according to claim 1,
**characterized in**
**that** the melt is prepared from the catalysts and the usual raw materials for the production of insulating materials from mineral fibers, particularly diabase, basalt and limestone as well as dolomite and/or raw materials obtained during production or recycling.

7. Method according to claim 1,
**characterized in**
**that** oxidic constituents contained in the melt, for example rare earths like La₂O₃, CeO₂, Pr₆O₁₁ are dissolved.

8. Method according to claim 1,
**characterized in**
**that** fine-grained catalyst masses are pressed to lumpy bodies before they are melted open.

9. Method according to claim 8,
**characterized in**
**that** residual materials taken from the primary waste cycle and/or silicious stones used as supporting grain and/or binders, for example hydraulic cements, latent-hydraulic materials, lime and/or lignin and/or molasses are added to the fine-grained catalyst masses.

10. Method according to claim 9,
**characterized in**
**that** the constituents of the melt are mixed before they are fed to the melting unit.

11. Method according to claim 1,
**characterized in**
**that** the catalysts are blown through blast forming into the melting unit, particularly a shaft furnace, as a fine-grained mass.

12. Method according to claim 1,
**characterized in**
**that** the catalysts are preheated before they are fed to the melting unit.

13. Method according to claim 12,
**characterized in**
**that** the preheating temperature is 600° at maximum.

14. A melt for producing mineral fibers for a mineral fiber web, particularly from rockwool, which can be made into insulating materials,
**characterized by**
oil refining catalysts that are no longer usable.

15. A melt according to claim 14,
**characterized in**
**that** the catalysts originate from cracking and/or hydrocracking processes.

16. A melt according to claim 14,
**characterized in**
**that** the catalysts are mixed with residual materials from the primary waste cycle and/or recycling materials from the mineral fiber production.

17. A melt according to claim 14,
**characterized by**
20 - 60% by weight of SiO₂
and 10 - 60% by weight, particularly
10 - 30% by weight of Al₂O₃.

18. A melt according to claim 14,
**characterized in**
**that** the catalysts have a grain size of between 2 and 6 mm, particularly between 3 and 4 mm.

19. A melt according to claim 14,
**characterized in**
**that** catalysts have a mean diameter of between 30 and 100 µm, preferably between 50 and 70 µm.

20. A melt according to claim 14,
**characterized in**
**that** the catalysts are formed as extrudates, of which the length preferably is between 1 and 5 mm, particularly between 2.5 and 3 mm.

21. A melt according to claim 14,
**characterized in**
**that** the catalysts include 10 - 30% by weight, particularly 15 - 25% by weight of metals like Ni or W, or 15 - 35% by weight, preferably 22- 28% by weight of CoO + MoO₃.

## Revendications

1. Procédé pour la fabrication de matériaux isolants en fibres minérales, en particulier en laine de verre et/ou laine minérale, pour lequel une masse de silicate fondu est fabriquée dans un agrégat de fusion, en particulier dans un cubilot, et est défibrée dans un dispositif de défibrage en fibres de préférence microfines, de préférence un liant et/ou une substance d'imprégnation étant ajoutés aux fibres et les fibres étant déposées sur un dispositif de transport comme non-tissé,
**caractérisé en ce**
**que** la masse de silicate fondu est fabriquée au moins partiellement à partir de catalyseurs du traitement du pétrole en particulier ne pouvant plus servir.

2. Procédé selon la revendication 1,
**caractérisé en ce**
**que** comme catalyseurs on utilise des catalyseurs provenant des procédés de craquage et/ou d'hydrocraquage.

3. Procédé selon la revendication 1,
**caractérisé en ce**
**que** pour les zéolithes la teneur en sodium des catalyseurs est réduite.

4. Procédé selon la revendication 1,
**caractérisé en ce**
**que** les métaux qui se détachent lors de la fonte des catalyseurs sont recueillis et sont évacués périodiquement.

5. Procédé selon la revendication 4,
**caractérisé en ce**
**que** les métaux sont recueillis en commun avec du fer métallique réduit à partir des matières brutes et sont évacués périodiquement.

6. Procédé selon la revendication 1,
**caractérisé en ce**
**que** la masse fondue est fabriquée à partir des catalyseurs et des autres matières brutes pour la fabrication de matériaux isolants en fibres minérales, en particulier de la diabase, du basalte et du calcaire ainsi que de la dolomite et/ou de matières brutes obtenues lors de la fabrication ou du recyclage.

7. Procédé selon la revendication 1,
**caractérisé en ce**
**que** les constituants oxydiques contenus dans la masse fondue, par exemple des terres rares comme La₂, O₃, CeO₂, Pr₆O₁₁ sont dissous.

8. Procédé selon la revendication 1,
**caractérisé en ce**
**que** des masses de catalyseurs à grains fins sont pressées en corps à morceaux grossiers avant leur fonte.

9. Procédé selon la revendication 8,
**caractérisé en ce**
**que** des sous-produits pris du circuit de déchets primaires et/ou des roches siliceuses utilisées comme grains de soutien et/ou des liants, par exemple des ciments hydrauliques, des substances hydrauliques latentes, de la chaux et/ou du lignine et/ou de la molasse sont ajoutés aux masses de catalyseurs à grains fins.

10. Procédé selon la revendication 9,
**caractérisé en ce**
**que** les constituants de la masse fondue sont mélangés avant d'être versés dans l'agrégat de fusion.

11. Procédé selon la revendication 1,
**caractérisé en ce**
**que** les catalyseurs sont soufflés comme masse à grains fins par des tuyères à vent dans l'agrégat de fusion, en particulier dans un four droit.

12. Procédé selon la revendication 1,
**caractérisé en ce**
**que** les catalyseurs sont préchauffés avant d'être amenés dans l'agrégat de fusion.

13. Procédé selon la revendication 12,
**caractérisé en ce**
**que** la température de préchauffage est de 600° C maximum.

14. Masse fondue pour la fabrication de fibres minérales pour un non-tissé en fibres minérales, en particulier en laine minérale, qui peut être traité en matériaux isolants, **caractérisée par** des catalyseurs du traitement du pétrole qui ne peuvent plus être utilisés.

15. Masse fondue selon la revendication 14,
**caractérisée en ce**
**que** les catalyseurs proviennent de procédés de craquage et/ou d'hydrocraquage.

16. Masse fondue selon la revendication 14,
**caractérisée en ce**
**que** les catalyseurs sont mélangés à des substances résiduelles provenant du circuit de déchets primaires et/ou de substances de recyclage de la production de fibres minérales.

17. Masse fondue selon la revendication 14, **caractérisée par**
20 à 60 % en masse de SiO₂
et
10 à 60 % en masse, en particulier
10 à 30 % en masse d'Al₂O₃.

18. Masse fondue selon la revendication 14,
**caractérisée en ce**
**que** les catalyseurs présentent une grosseur de grains entre 2 et 6 mm, en particulier entre 3 et 4 mm.

19. Masse fondue selon la revendication 14,
**caractérisée en ce**
**que** les catalyseurs présentent un diamètre moyen entre 30 et 100 µm, de préférence entre 50 et 70 µm.

20. Masse fondue selon la revendication 14,
**caractérisée en ce**
**que** les catalyseurs sont configurés comme des pièces comprimées extrudées qui ont de préférence une longueur entre 1 et 5 mm, en particulier entre 2,5 et 3 mm.

21. Masse fondue selon la revendication 14,
**caractérisée en ce**
**que** les catalyseurs ont 10 à 30 % en masse, en particulier 15 à 25 % en masse de métaux comme Ni ou W ou 15 à 35 % en masse, de préférence 22 à 28 % en masse de CoO + MoO₃.
